# EUROPÄISCHE PATENTANMELDUNG

(11) **EP 4 706 939 A2**
(43) Veröffentlichungstag der Anmeldung: **11.03.2026**
(21) Anmeldenummer: 25200948.5
(22) Anmeldetag: 09.09.2025
(51) Int. Cl.: B29C 49/46, B29C 49/58, B29C 49/12, B29L 31/00, B29C 49/78, B29C 49/62, B29C 49/64, B29C 49/42

(54) **UMFORMANORDNUNG UND VERFAHREN ZUR UMFORMUNG EINES HOHLKÖRPERS**

(30) Priorität: 09.09.2024 DE 102024125830
(71) Anmelder: KHS GmbH, 44143 Dortmund (DE)
(72) Erfinder: Baumgarte, Rolf, 44143 Dortmund (DE); Striebel, Carlo, 44143 Dortmund (DE); Kiefer, Margit, 44143 Dortmund (DE)
(74) Vertreter: Andrejewski - Honke Patent- und Rechtsanwälte Partnerschaft mbB

(57) **Zusammenfassung**

Die Erfindung betrifft eine Umformanordnung umfassend eine Umformmaschine (1) mit einer einem Anschlussbereich (7) aufweisenden Außenform (2) und zumindest einem mit dem Anschlussbereich (7) verbundenen Strömungsweg (11, 11', 16, 16'), und umfassend einen Hohlkörper (3), welcher einen von einer Wandung (5) umschlossenen und durch eine Mündung (6) zugänglichen Innenraum (4) aufweist, wobei der Hohlkörper (3) derart mit der Mündung (6) in dem Anschlussbereich (7) angeordnet ist, dass der Innenraum (4) in Strömungsverbindung mit dem Strömungsweg (11, 11', 16, 16') steht. Erfindungsgemäß ist an dem Übergang zwischen dem Strömungsweg (11, 11', 16, 16') und dem Innenraum (4) zumindest ein Filterkörper (15, 15', 15", 15"', 15"") angeordnet.

## Beschreibung

Die Erfindung betrifft eine Umformanordnung umfassend eine Umformmaschine mit einer einem Anschlussbereich aufweisenden Außenform und zumindest einem mit dem Anschlussbereich verbundenen Strömungsweg. Die Umformanordnung umfasst ferner einen Hohlkörper, welcher einen von einer Wandung umschlossenen und durch eine Mündung zugänglichen Innenraum aufweist. Der Hohlkörper ist derart mit der Mündung in dem Anschlussbereich angeordnet, dass der Innenraum in Strömungsverbindung mit dem Strömungsweg steht.

Die Anordnung ist zur Umformung des Hohlkörpers vorgesehen und geeignet. Bei dem Hohlkörper kann es sich insbesondere um einen sogenannten Vorformling aus einem Kunststoffmaterial handeln, welcher in einem erwärmten Zustand durch innenseitige Druckbeaufschlagung durch ein Fluid zu einem Behälter umgeformt wird. Die äußere Gestalt des umgeformten Behälters wird dabei durch die Geometrie der Außenform festgelegt. Das Fluid kann auch als Druckmedium bezeichnet werden. Dabei kann es sich insbesondere um gereinigte Luft oder ein Inertgas(-Gemisch), z. B. mit technisch reinem Stickstoff handeln.

Ein derartiger Umformprozess wird im Allgemeinen auch als Blasprozess und die zugeordnete Umformmaschine als Blasmaschine bezeichnet. Im Speziellen kann auch zusätzlich eine Reckstange vorgesehen sein, welche innenseitig in den Innenraum des Grundkörpers eingeführt wird, um diesen durch direkten mechanischen Kontakt umzuformen. Dies wird auch als Streckblasverfahren bezeichnet.

Aufgrund des während des Umformprozesses benötigten Innendrucks - welcher 10 bar und mehr, insbesondere 20 bis 40 bar betragen kann - wird von einem kompressiblen Fluid eine beträchtliche Menge benötigt. Dieses muss zunächst in den Innenraum eingeleitet und später wieder herausgeleitet werden. Die benötigte Menge des Druckmediums weist bei Standardbedingungen - insbesondere Umgebungsdruck - ein vielfaches Volumen des Innenraums des umgeformten Hohlkörpers auf. Entsprechend sind sowohl bei der Druckerhöhung als bei der späteren Druckentlastung beträchtliche Ströme des Druckmediums erforderlich, welche durch die Mündung in den Innenraum eingeleitet und später wieder abgeleitet werden müssen.

Diese Fluidströme können jedoch problematisch sein im Hinblick auf mögliche Verschmutzungen bzw. Verunreinigungen. Zwar wird das Druckmedium üblicherweise in gereinigter Form bereitgestellt, jedoch kommt es vor, dass innerhalb des Leitungssystems Fremdstoffe eingebracht werden - etwa aufgrund von Verschleiß und/oder Rückständen bei Wartungsarbeiten sowie unzureichend arbeitenden Vorfiltern. Gerade in Anbetracht der Tatsache, dass die Hohlkörper in ihrer späteren Verwendung als Behälter oftmals für Lebensmittel wie Getränke verwendet werden, muss eine Übertragung von Verunreinigungen aus dem Leitungssystem in die Behälter unter allen Umständen vermieden werden.

Auch kann es vorkommen, dass ein Hohlkörper, insbesondere Vorformling, der Umformmaschine im verunreinigten Zustand zugeführt wird. In dem Innenraum vorhandene Verunreinigungen können dann bei der Druckentlastung in den Strömungsweg gelangen, sodass diese Verunreinigungen nachfolgend einer nicht überschaubaren Anzahl von Hohlkörpern zugeführt werden können, sodass diese damit kontaminiert werden.

Vor diesem Hintergrund liegt der Erfindung die Aufgabe zugrunde, die Verunreinigung von Hohlkörpern in der Umformmaschine zu verhindern. Lösung dieser Aufgabe und Gegenstand der Erfindung ist eine Umformanordnung nach Anspruch 1 sowie ein Verfahren nach Anspruch 15. Bevorzugte Ausgestaltungen sind in den abhängigen Unteransprüchen angegeben.

Ausgehend von der gattungsgemäßen Umformmaschinenanordnung ist erfindungsgemäß vorgesehen, dass an dem Übergang zwischen dem Strömungsweg und dem Innenraum zumindest ein Filterkörper angeordnet ist. Durch den Filterkörper wird verhindert, dass Schmutzpartikel aus dem Strömungsweg in den Innenraum übertragen werden können und umgekehrt.

Der Innenraum des Hohlkörpers bezeichnet das gesamte von der Wandung umschlossene Volumen. Dies kann sich - unter anderem durch die Umformung - hinsichtlich der Größe und Ausrichtung verändern. Die Begrenzung des Innenraums bildet eine insbesondere minimale Fläche, welche durch die Mündung berandet ist.

Der Strömungsweg bezeichnet eine zu der Umformmaschine gehörende Einrichtung, welche zur Leitung eines Fluidstroms - insbesondere des Druckmediums - eingerichtet ist. Bei einem Entfernen bzw. einem Austausch des Hohlkörpers verbleiben die den Strömungsweg definierenden Bauteile im Bereich der Umformmaschine - zu der sie gehören. Zumindest zeitweilig kann sich der Strömungsweg mit dem Innenraum des Hohlkörpers räumlich überschneiden.

Im Sinne der Erfindung meint Übergang den Raum der Anordnung, welcher ein Medienstrom zwingend durchströmen muss, um von dem Innenraum in den jeweiligen Strömungsweg oder umgekehrt zu wechseln.

Insbesondere ist der Strömungsweg Bestandteil eines Leitungssystems. Selbst für den Fall, dass in dem Leitungssystem Schmutzpartikel enthalten sind, werden diese somit nicht in den Innenraum des Hohlkörpers eingeleitet. Umgekehrt werden auch Verschmutzungen, welche mit einem Hohlkörper in das System eingetragen werden, daran gehindert sich im Leitungssystem, insbesondere in dem Strömungsweg, zu verteilen, um damit potenziell an nachfolgende Hohlkörper übertragen werden zu können.

Der Strömungsweg kann bevorzugt zur Zuführung und/oder zur Entfernung des Fluids bzw. Druckmediums in den bzw. aus dem Innenraum ausgebildet sein. Hierdurch wird das Fluid beim Durchströmen des Strömungsweges zwangsweise durch den Filterkörper hindurchgeleitet und dabei mitgeführte Schmutzpartikel zurückgehalten.

Zur Einleitung des Fluids ist das Leitungssystem vorzugsweise mit zumindest einer Druckquelle verbunden. Besonders bevorzugt können mehrere Druckquellen unterschiedlicher Druckniveaus vorgesehen sein, welche zur Ausbildung eines mehrstufigen Blasprozesses sequenziell mit dem Innenraum verbunden werden können.

Der Strömungsweg kann ebenfalls mit einer Entlastungsleitung verbunden sein, welche den Innenraum mit zumindest einer Drucksenke verbindet. Dadurch kann der Innendruck innerhalb des Hohlkörpers nach Abschluss der Umformung wieder abgesenkt werden. Bei der Drucksenke kann es sich insbesondere um die Umgebung oder ein Druck-Wiederverwertungssystem handeln, welches das Fluid auf einem Druckniveau oberhalb des Umgebungsdrucks sammelt und einer erneuten Komprimierung zuführt.

Vorzugsweise ist der Strömungsweg gleichzeitig Teil der Zuflussleitung als auch der Entlastungsleitung. Dadurch kehrt sich die Strömungsrichtung im Betrieb zwischen dem Befüllen des Innenraums und der Druckentlastung des Innenraums um.

Es ist denkbar, dass die Entlastungsleitung in unmittelbarer Nähe des Filterkörpers abzweigt, sodass bei dieser "Rückspülung" aus dem Filterkörper gelöste Schmutzpartikel unmittelbar abgeführt werden und bei einer erneuten Befüllung eines folgenden Hohlkörpers nicht in den Filterkörper erneut gelangen. Besonders bevorzugt ist in der Entlastungsleitung ein zusätzlicher Schmutzabscheider angeordnet. Dabei kann es sich insbesondere um einen weiteren Filterkörper handeln.

Gemäß einer bevorzugten Ausgestaltung der Erfindung weist der Filterkörper einen minimalen Abstand von weniger als 5 cm zu dem Innenraum auf. Dadurch ergibt sich ein besonders kleiner Totraum, in dem Schmutzpartikel aus einem Hohlkörper verbleiben könnten. Besonders bevorzugt beträgt der minimale Abstand zwischen dem Filterkörper und dem Innenraum weniger als 1 cm, besonders bevorzugt weniger als 5 mm, insbesondere ist überhaupt kein Abstand, d. h. 0 mm vorgesehen.

Gemäß einer besonders bevorzugten Ausgestaltung erstreckt sich der Filterkörper in den Innenraum hinein. Dadurch kann der effektive Strömungsquerschnitt des Filterkörpers erhöht und so die Durchleitung vereinfacht werden. Gleichzeitig wird der Totraum minimiert.

Gemäß einer besonders bevorzugten Ausgestaltung ist der Filterkörper dazu eingerichtet, Feststoffe mit einer Korngröße von zumindest 1 mm zurückzuhalten. Dadurch können üblicherweise durch Verschleiß auftretende Fremdstoffe sicher zurückgehalten werden. Besonders bevorzugt handelt es sich um einen Feinfilter, welcher Feststoffe mit einer Korngröße von zumindest 500 µm, vorzugsweise zumindest 5 µm - vorzugsweise mit einer Effizienz von zumindest 95 % - zurückhalten kann. Dieser Filter ist insbesondere auch dazu geeignet, staubige Feststoffe am Übertritt zwischen dem Leitungssystem und dem Innenraum zu hindern.

Vorzugsweise weist das Leitungssystem einen ersten Strömungsweg und einen zweiten Strömungsweg auf, welche jeweils mit dem Innenraum verbunden sind. Dabei ist zwischen dem ersten Strömungsweg und dem Innenraum zumindest ein erster Filterkörper und zwischen dem zweiten Strömungsweg und dem Innenraum zumindest ein zweiter Filterkörper angeordnet. Es sind auch Ausgestaltungen denkbar, bei denen der erste Filterkörper und der zweite Filterkörper in einem einzigen Bauteil vereinigt sind. Der zweite Strömungsweg kann insbesondere für eine von dem ersten Strömungsweg separate Zu- und Ableitung des Fluids vorgesehen sein. Auch kann der zweite Strömungsweg für die gezielte zusätzliche Beaufschlagung mit einem Kühlmedium vorgesehen sein. Das Kühlmedium kann sich von dem Druckmedium der stofflichen Zusammensetzung unterscheiden oder identisch ausgebildet sein. Besonders bevorzugt weist das zugeleitete Kühlmedium eine geringere Temperatur auf als das Druckmedium.

Vorzugsweise weist die Umformmaschine ein Differenzdruck-Messgerät auf, welches vor und hinter dem Filterkörper angeschlossen ist. Dadurch wird ermöglicht, den Strömungswiderstand des Filterkörpers im Betrieb zu überwachen. Hierdurch kann insbesondere durch einen Anstieg des Strömungswiderstands auch eine Verschmutzung des Filterkörpers detektiert werden. Bei einer zunehmenden Verschmutzung ist dann ein Wechsel oder eine Reinigung einzuleiten.

Alternativ zu einem Filterwechsel kann auch ein Reinigungszyklus durchgeführt werden. Dabei wird der Filter ohne Einlegen eines Hohlkörpers von einem Reinigungsfluid durchströmt. Dabei kann es sich insbesondere um das Prozessgas handeln. Bei einem Durchströmen des Behälterkörpers entgegen der üblichen Strömungsrichtung können im Filter aufgefangene Schmutzkörper entfernt und mit dem Reinigungsfluid gemeinsam abgezogen werden. Besonders bevorzugt weist der Strömungsweg hierzu einen - möglichst nah am Filter angeordneten - Abzweig auf.

Vorzugsweise ist an der Umformmaschine eine Blasdüse ausgebildet. Diese erstreckt sich bei einem in dem Anschlussbereich aufgenommenen Hohlkörper bis in den Innenraum hinein. Die Blasdüse dient dazu, die Strömung des Fluids - insbesondere beim Einleiten - zu formen und dadurch zu einer zielgerichteten Temperierung des Hohlkörpers beizutragen.

Besonders bevorzugt ist der Filterkörper (zumindest teilweise) in der Blasdüse angeordnet. Somit kann die Blasdüse gleichzeitig als Träger für den Filterkörper dienen.

Alternativ oder zusätzlich kann der Filterkörper zumindest teilweise in einem Ringraum zwischen der Blasdüse und einer Innenseite der Wandung des Hohlkörpers angeordnet sein. Dadurch kann insbesondere auch der Strömungsquerschnitt durch den Filterkörper sowie die Filter-Effizienz des Filterkörpers erhöht werden.

Gemäß einer besonders bevorzugten Ausgestaltung der Erfindung weist die Umformmaschine eine linear geführte Reckstange aus. Die Reckstange ist dazu eingerichtet, mit einer Innenseite der Wandung des Hohlkörpers in Kontakt gebracht zu werden. Die Reckstange kann insbesondere mechanische Kräfte auf den Hohlkörper während des Umformprozesses übertragen. Dabei handelt es sich um den sogenannten Streckblas-Prozess. Vorzugsweise ist die Reckstange zylindrisch um eine Längserstreckungsachse ausgebildet, welche mit einer Symmetrieachse des Hohlkörpers fluchtet.

Besonders bevorzugt wird zumindest ein Strömungsweg durch einen die Reckstange umgebenden Ringspalt gebildet. Dieser kann insbesondere konzentrisch um eine Längserstreckungsachse der Reckstange ausgebildet sein. Die Ein- und/oder Ausleitung des Fluids kann somit entlang der Reckstange in den Innenraum erfolgen. Besonders bevorzugt umgibt der Filterkörper die Reckstange konzentrisch und füllt den Ringraum insbesondere vollständig aus. Diese Anordnung bietet eine einfach zu konstruierende und effiziente Positionierung des Filterkörpers. Vorzugsweise liegt der Filterkörper unmittelbar an einer Außenseite der Reckstange an.

Bevorzugt ist die Reckstange hohl mit einem innenliegenden Strömungsweg ausgebildet. Der innenliegende Strömungsweg kann insbesondere mit einem Druckreservoir verbunden sein. Dabei wird bei der Erhöhung des Innendrucks im Innenraum ein Teil des Druckmediums durch den innenliegenden Strömungsweg in das Reservoir geleitet und aufgrund der Druckerhöhung komprimiert. Bei einer anschließenden Entspannung - Drucksenkung - fließt dann aus dem Druckreservoir ein Teil des Druckmediums über den innenliegenden Strömungsweg in den Innenraum. Dies kann zur Kühlung der umgeformten Behälter beitragen. Das Druckreservoir kann gleichzeitig durch einen Abschnitt des innenliegenden Strömungsweg bzw. dessen Gesamtheit gebildet sein.

Alternativ oder zusätzlich kann der innenliegende Strömungsweg zur Zu- und/oder Abführung des Fluides bzw. Druckmediums oder eines Kühlmediums vorgesehen sein.

Besonders bevorzugt ist am Übergang zwischen dem innenliegenden Strömungsweg und dem Innenraum zumindest ein weiterer Filterkörper ausgebildet. Dieser dient dazu eine Übertragung von Schmutzpartikeln aus oder in den innenliegenden Strömungsweg zum Innenraum zu unterbinden.

Weiterhin betrifft die Erfindung eine zuvor beschriebene Umformmaschine. Diese weist eine Hohlform mit einem Anschlussbereich zur Aufnahme der Mündung eines Hohlkörpers auf. An den Anschlussbereich grenzt zumindest ein Strömungsweg, welcher an den Innenraum eines in dem Anschlussbereich aufgenommenen Hohlkörpers angrenzt. Erfindungsgemäß ist an dem zumindest einen Strömungsweg zumindest ein Filterkörper derart angeordnet, dass dieser am Übergang zu dem Innenraum eines in dem Anschlussbereich aufgenommenen Hohlkörpers positioniert ist.

Gemäß einer besonders bevorzugten Ausgestaltung ist der Strömungsweg über zumindest einen Bypasskanal unter Umgehung des Filterkörpers mit dem Innenraum verbunden. Der Bypasskanal dient dazu in bestimmten Betriebszuständen einen direkten Fluidstrom zwischen dem Innenraum und dem Strömungsweg zu ermöglichen.

Besonders bevorzugt ist der Bypasskanal durch zumindest eine Ventilanordnung steuerbar. Dadurch kann beeinflusst werden, in welchem Umfang und/oder in welchen Betriebszuständen eine Strömung durch den Bypasskanal erfolgt. Beispielsweise kann vorgesehen sein, dass der Bypasskanal ausschließlich beim Einströmen von dem Strömungsweg in den Innenraum oder beim Ausströmen vom Innenraum in Richtung des Strömungswegs geöffnet ist. In dem jeweils anderen Zustand ist der Strömungsweg zumindest teilweise, vorzugsweise vollständig, geschlossen. Eine solche Konfiguration ist beispielsweise denkbar, wenn das Risiko von Verunreinigungen - welche durch den Filterkörper aufgehalten werden sollen - entweder in dem Strömungsweg oder in dem Innenraum des Hohlkörpers signifikant höher ist als umgekehrt. Auch kommt ein Bypasskanal infrage, wenn aus prozesstechnischen Gründen entweder beim Einleiten oder beim Ausleiten des Prozessfluids eine höhere Strömungsgeschwindigkeit erforderlich ist.

Gemäß einer bevorzugten Ausgestaltung umfasst die Ventilanordnung zumindest ein Rückschlagventil. Ein Rückschlagventil ist dazu eingerichtet, eine Strömung nur in einer Richtung zuzulassen und in der entgegengesetzten Richtung selbsttätig zu sperren. Das Rückschlagventil kann beispielsweise mit einem federbelasteten Ventilkörper oder mit einer Membran ausgestattet sein.

In einer ersten Ausgestaltung ist das Rückschlagventil derart ausgerichtet, dass der Bypasskanal ausschließlich bei einer einströmenden Flussrichtung (von dem Strömungsweg in Richtung des Innenraums) geöffnet ist. In diesem Szenario wird davon ausgegangen, dass das bereitgestellte Prozessgas frei von Verunreinigungen ist. Durch das sich beim Einströmen öffnende Rückschlagventil wird mit dem Bypasskanal ein zusätzlicher Strömungsweg und damit ein geringerer Strömungswiderstand als bei einem vollständigen Durchfließen durch den Filterkörper hergestellt. Infolgedessen kann mit geringerem Aufwand und/oder größerer Geschwindigkeit das Einströmen in den Hohlkörper erfolgen. Bei der anschließenden Druckentlastung/dem Entleeren des Hohlkörpers werden etwaige darin vorhandene Schmutzpartikel durch den Filterkörper aufgehalten, da der Strom ausschließlich durch das Filtermaterial erfolgt. Dadurch kann eine Kontamination des gesamten Leitungssystems und eine großflächige Propagation des Schmutzes in nachfolgende Hohlkörper und andere Blasstationen unterbunden werden.

**In** einer alternativen Ausführungsform ist das Rückschlagventil in dem Bypasskanal derart angeordnet, dass dieses beim Einströmen sperrt und beim Ausströmen den Bypasskanal freigibt. Dieses ist in den Szenarien vorteilhaft, in denen bei den zugeführten Hohlkörpern eine besonders hohe Reinheit bereits sichergestellt ist und zusätzlich eine Kontamination von außen durch die Umformanordnung verhindert werden soll.

In einer alternativen Ausgestaltung kann die Ventilanordnung auch zumindest einen Ventilschieber umfassen. Dabei handelt es sich um ein mechanisches Element, welches quer zur Strömungsrichtung über eine Öffnung oder in einen Strömungskanal, geschoben werden kann. Insbesondere ist der Schieber so eingerichtet, dass er den Strömungsweg in einer Schließposition vollständig abdeckt und in einer Öffnungsposition vollständig freigibt.

Gemäß einer besonders bevorzugten Ausgestaltung ist der Filterkörper zumindest teilweise verschieblich ausgebildet und mit einem Ventilschieber gekoppelt. Beispielsweise kann zumindest ein Teil des Filterkörpers verschieblich in dem Strömungsweg geführt sein, wobei der Ventilschieber durch ein Teil des Filterkörpers gebildet wird - z. B. mit einer strömungsundurchlässigen außenseitigen Beschichtung - oder an diesem unmittelbar oder mittelbar befestigt ist. Aufgrund des Strömungswiderstands und damit verbundene Druckabfalls wirkt beim Durchströmen des Filterkörpers eine Kraft in der Strömungsrichtung. Durch die entsprechende Positionierung und/oder Ausrichtung des Ventilschiebers kann festgelegt werden, in welcher Strömungsrichtung der Ventilschieber schließt und in welcher er eröffnet.

Gemäß einer weiteren bevorzugten Ausführungsform umfasst die Ventilanordnung zumindest ein Überdruckventil. Mit zunehmender Benutzungsdauer wird das Ventilelement zunehmend mit Schmutzpartikeln gesättigt, wodurch der Strömungswiderstand steigt. Mit einem Überdruckventil können unsichere Prozesszustände vermieden werden, indem der gesättigte Filter zumindest teilweise umgegangen wird. Das Überdruckventil kann als Rückschlagventil mit entsprechend ausgewählter Andruckkraft, als Berstscheibe oder beispielsweise als flexibler - unter Überdruck verformbarer - Ventilschieber ausgebildet sein. Es ist ebenso denkbar, dass zwar ein mit einem Ventilschieber gekoppelter Teil eines Filterelements verschieblich gelagert ist, jedoch die bei einem nominellen Druckabfall anfallenden Schiebekräfte des Fluidstroms geringer sind als die Haftreibung des beweglich gelagerten Filterkörpers, welche mit einem Ventilschieber gekoppelt ist. Die Schiebefunktion - und damit die zumindest teilweise Freigabe des Bypasskanals - wird erst dann aktiviert, wenn die durch den Druckabfall anfallende Kraft größer ist als der Schiebewiderstand.

Ein weiterer Aspekt der Erfindung betrifft ein Verfahren zur Umformung eines Hohlkörpers mit einem durch eine Wandung umschlossenen und durch eine Mündung zugänglichen Innenraums. Dabei wird der Hohlkörper in eine Hohlform einer Umformmaschine derart eingelegt, dass die Mündung in einem Anschlussbereich der Hohlform aufgenommen und mit zumindest einem Strömungsweg verbunden ist. Danach wird durch den zumindest einen Strömungsweg ein Fluid, insbesondere Druckmedium, in den Innenraum eingeleitet und/oder aus diesem abgelassen, wobei das Fluid einen an dem Übergang zwischen dem Strömungsweg und dem Innenraum angeordneten Filterkörper durchströmt.

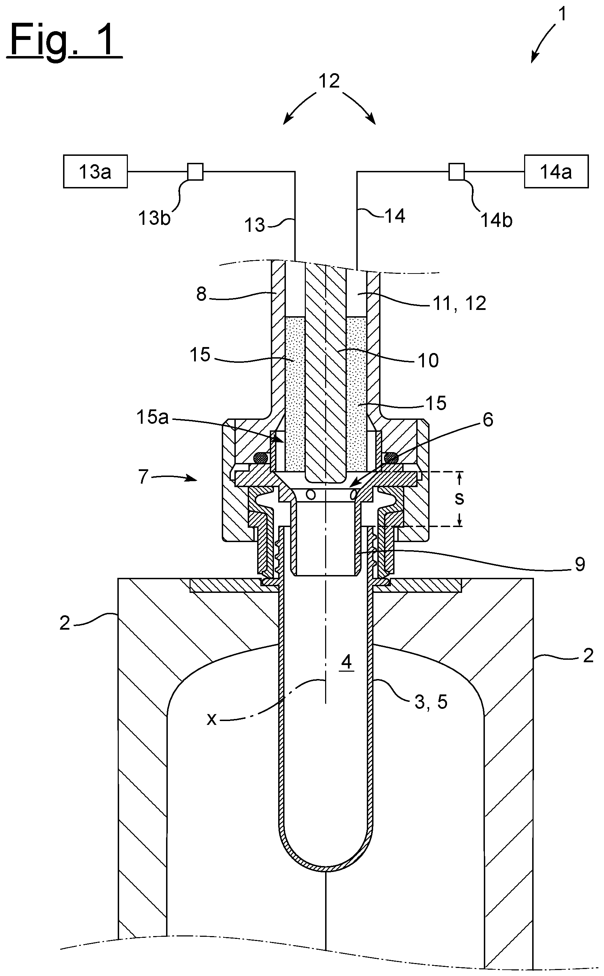

Die Erfindung wird nachfolgend anhand von lediglich Ausführungsbeispiele darstellenden Figuren erläutert. Die Figuren 1 bis 6B zeigen dabei jeweils schematisch einen Querschnitt durch eine erfindungsgemäße Umformanordnung.

Fig. 1 zeigt eine erste Ausführungsform der erfindungsgemäßen Umformanordnung. Diese umfasst eine Umformmaschine 1 mit einer Außenform 2 für einen Hohlkörper 3. In den Ausführungsbeispielen ist der Hohlkörper 3 als Vorformling aus Kunststoff ausgebildet, welcher durch eine anschließende innenseitige Druckbeaufschlagung zu einem Behälterkörper aufgeweitet wird. Der Hohlkörper 3 weist einen Innenraum 4 auf, welcher durch eine Wandung 5 begrenzt wird und durch eine Mündung 6 von außen zugänglich ist. Die Mündung 6 ist in einem Aufnahmeabschnitt 7 der Hohlform 2 aufgenommen.

Die Umformmaschine 1 weist ein Längsrohr 8 auf, welches konzentrisch um eine Längserstreckungsachse x des Hohlkörpers 3 ausgebildet ist. Das Längsrohr 8 mündet in den Anschlussbereich 7 und schließt mit einer Blasdüse 9 ab, welche in den Innenraum 4 des Hohlkörpers 3 hineinragt. Weiterhin ist innerhalb des Längsrohrs 8 eine massive Reckstange 10 um die Längserstreckungsachse x ausgebildet und entlang dieser linear verschieblich geführt. Zwischen der Reckstange 10 und dem Längsrohr 8 ist ein Ringspalt ausgebildet, welcher einen ersten Strömungsweg 11 ausbildet. Der erste Strömungsweg 11 ist mit dem Innenraum 4 des Hohlkörpers 3 verbunden und Teil eines Leitungssystems 12.

Das Leitungssystem 12 der Umformmaschine 1 umfasst weiterhin einen an den ersten Strömungsweg 11 angeschlossene Zuflussleitung 13, welche den ersten Strömungsweg 11 mit einer Druckquelle 13a über ein Ventil 13b steuerbar verbindet. Für einen mehrstufigen Blasprozess können auch weitere, nicht dargestellte, Druckquellen und/oder Ventile vorgesehen sein. Über die Leitung 13 und den ersten Strömungsweg 11 kann das Druckmedium aus der Druckquelle 13a in den Innenraum 4 eingeleitet werden, um diesen aufzuweiten.

Weiterhin umfasst das Leitungssystem 12 eine Entlastungsleitung 14, welches den ersten Strömungsweg 11 mit einer Drucksenke 14a über ein zweites Ventil 14b steuerbar verbindet. Entsprechend kann ein unter Überdruck stehendes Medium innerhalb des Innenraums 4 durch die Entlastungsleitung 14 zu der Drucksenke 14a abgeleitet werden.

Erfindungsgemäß ist in dem ersten Strömungsweg 11 ein Filterkörper 15 am Übergang zu dem Innenraum 4 angeordnet. Der Filterkörper 15 führt den ersten Strömungsweg 11 zumindest abschnittsweise in seinem gesamten Querschnitt vollständig aus. Der Filterkörper 15 liegt unmittelbar sowohl an einer Außenwandung der Reckstange 10 als auch an einer Innenwandung des Längsrohrs 8 an und erstreckt sich bis in die Blasdüse 9 hinein. Der Filterkörper 15 endet mit einem minimalen Abstand s von nicht mehr als 5 cm zu dem Innenraum 4.

Zur Verbesserung der Filterleistung steht das untere Ende 15a des Filterkörpers 15 frei vor, ohne dass an der Außenseite an der Wandung des Längsrohrs 8 anliegt. Dabei wird - insbesondere bei einer Strömung aus Richtung des Innenraums 4 zu dem Leitungssystem 12 hin die Eintrittsfläche in das Material des Filterkörpers 15 vergrößert. Dadurch kann das oberflächliche Zusetzen des Filtermaterials verlangsamt werden.

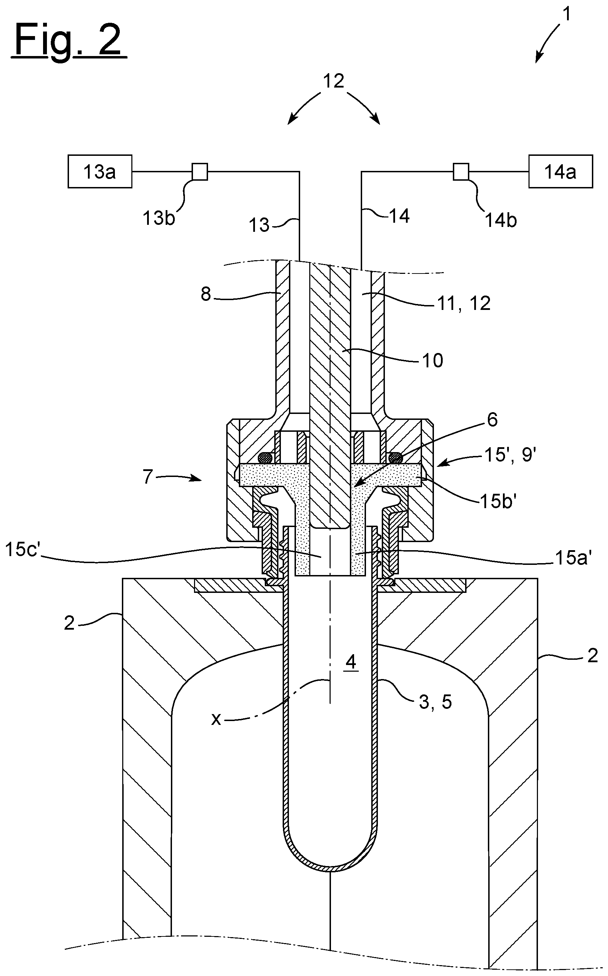

In der Fig. 2 ist eine weitere Ausführungsform dargestellt, welche auch mit der ersten kombiniert werden kann. Bei im Übrigen identischem Aufbau schließt der Strömungsweg 11 nicht durch eine an das Längsrohr 8 anschließende Blasdüse 9 ab, sondern endet an der Mündung 6 des Hohlkörpers 3. Die Funktion der Blasdüse 9 wird übernommen für eine alternative Ausgestaltung des Filterkörpers 15'. Der alternative Filterkörper 15' ist als Rotationskörper um die Längserstreckungsachse x ausgebildet, welcher im Querschnitt eine L-Form mit einem ersten in den Innenraum 4 hineinragenden Schenkel 15a' und einem rechtwinklig daran anschließenden und zwischen der Mündung 6 und dem Längsrohr 8 angeordneten zweiten Schenkel 15b' ausgestaltet ist. Der Rotationskörper weist mittig eine Durchlassöffnung 15c' für die Reckstange 10 auf. In Ausführungsformen ohne Reckstange 10 kann diese auch weggelassen werden, sodass der Filterkörper eine vollständige Blasdüse 9' bildet.

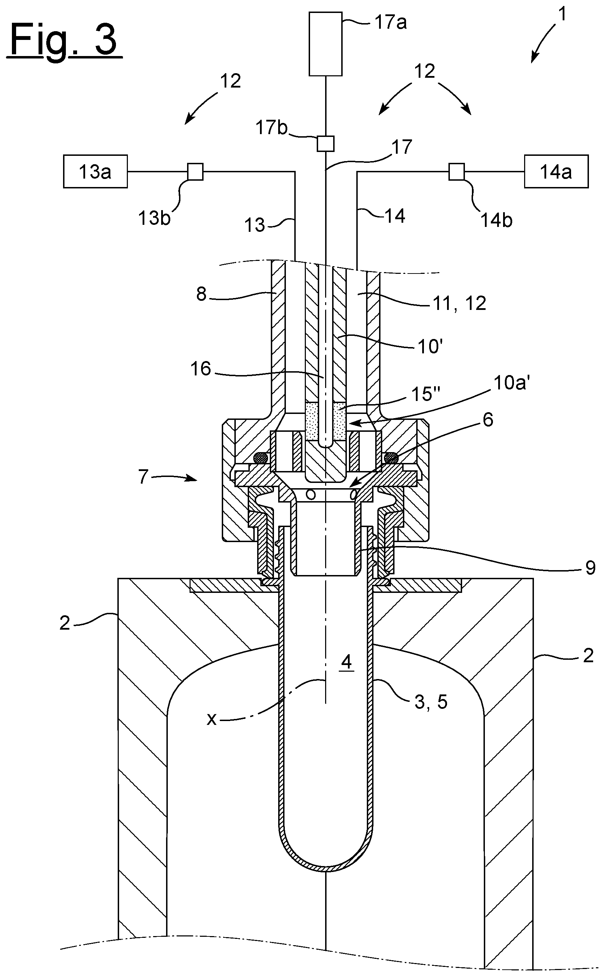

Eine weitere ebenfalls kombinierbare Ausführungsform ist in der Fig. 3 dargestellt: Die dortige Reckstange 10 ist hohl ausgebildet mit einem innenliegenden Strömungsweg 16. An der Spitze der Reckstange 10' sind seitliche Öffnungen 10a' ausgebildet, welche mit einem Filterkörper 15" ausgefüllt sind.

Wenn die Reckstange 10' in den Innenraum 4 eingefahren ist, trennt der Filterkörper 15" den innenliegenden Strömungsweg 16 vom Innenraum 4 des Hohlkörpers 3. In dem skizzierten Ausführungsbeispiel umfasst das Leitungssystem 12 ferner eine an den innenliegenden Strömungsweg 16 angeschlossene Kühlleitung 17, welche diesen mit einer Kühlmedienquelle 17a und gesteuert durch ein Kühlventil 17b verbindet.

Die Filterung an der Kühlleitung 17 ist insbesondere deswegen vorteilhaft, da das Kühlmedium einen geringeren Reinheitsgrad als das Druckmedium aufweisen kann. Zusätzlich wird bei der Druckbeaufschlagung - entlang des ersten Strömungswegs 11 das Druckmedium unter Druckeinfluss zumindest teilweise in das Innere der hohlen Reckstange 10' hineingedrückt. Entsprechend ist die Filterung am Übergang zwischen dem innenliegenden Strömungsweg 16 und dem Innenraum 4 zweckmäßig.

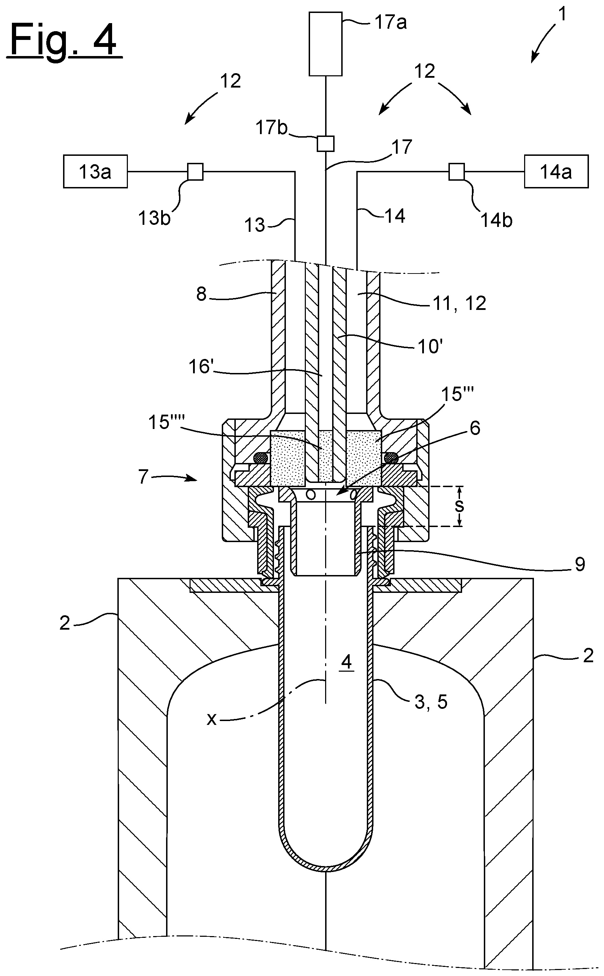

Die Fig. 4 zeigt eine Kombination aus einem ersten Filterkörper 15‴ am Übergang zwischen dem ersten Strömungsweg 11 und dem Innenraum 4 sowie einem weiteren Filterkörper 15‴′ am Übergang zwischen dem innenliegenden Strömungsweg 16' einer hohlen Reckstange 10'. Hierdurch werden die erfindungsgemäßen Vorteile optimaler Weise an beiden Strömungswegen angewendet.

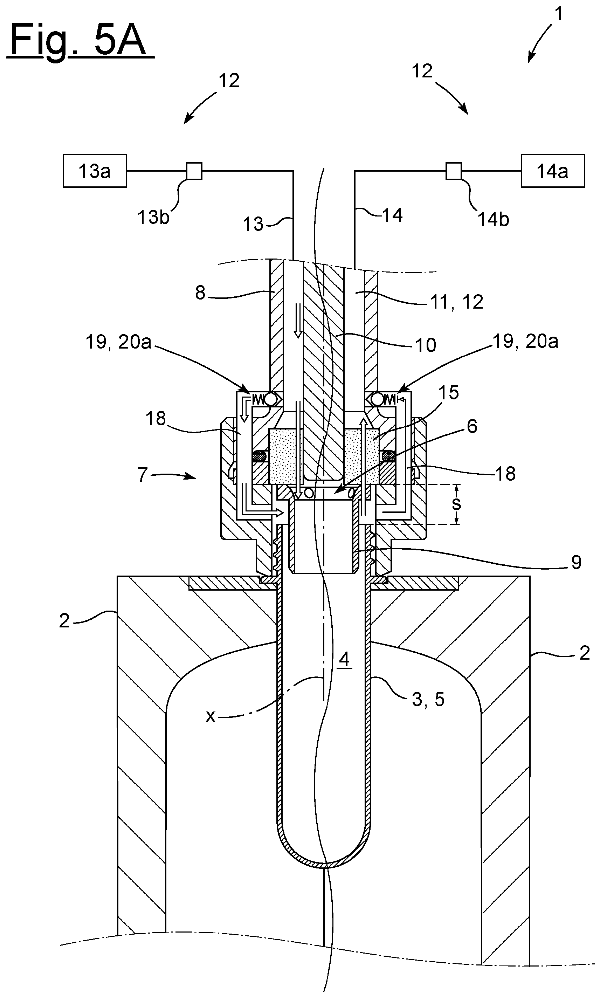

In den Ausführungsbeispielen gemäß den Figuren 5A bis 6B ist der Strömungsweg 11 mit dem Innenraum 4 unter Umgehung des Filterelements 15 durch einen Bypasskanal 18 verbunden. Der Einfachheit halber ist ein einziger Strömungsweg 11 vorgesehen mit einer sich darin erstreckenden massiven Reckstange sehen. Zur Verdeutlichung des Strömungsverhaltens sind die Figuren 5A bis 6B jeweils zweigeteilt dargestellt, wobei die linke Bildhälfte das Strömungsverhalten beim Einströmen und die rechte Bildhälfte das Strömungsverhalten beim Ausströmen verdeutlicht.

In dem Ausführungsbeispiel gemäß Fig. 5A weist die Ventilanordnung 19 zur Steuerung des Strömungsflusses ein Rückschlagventil 20a auf, welches den Strömungsfluss in der Einströmungsrichtung (linke Bildhälfte) freigibt. Dadurch wird ein Teil des eintretenden Fluidstroms an dem Filterelement 15 vorbei unmittelbar in den Innenraum 4 des Hohlkörpers 3 geführt. In der rechts dargestellten Entlastungsphase hingegen sperrt das Rückschlagventil 20a, sodass der gesamte austretende Fluidstrom durch den Filterkörper 15 geleitet wird.

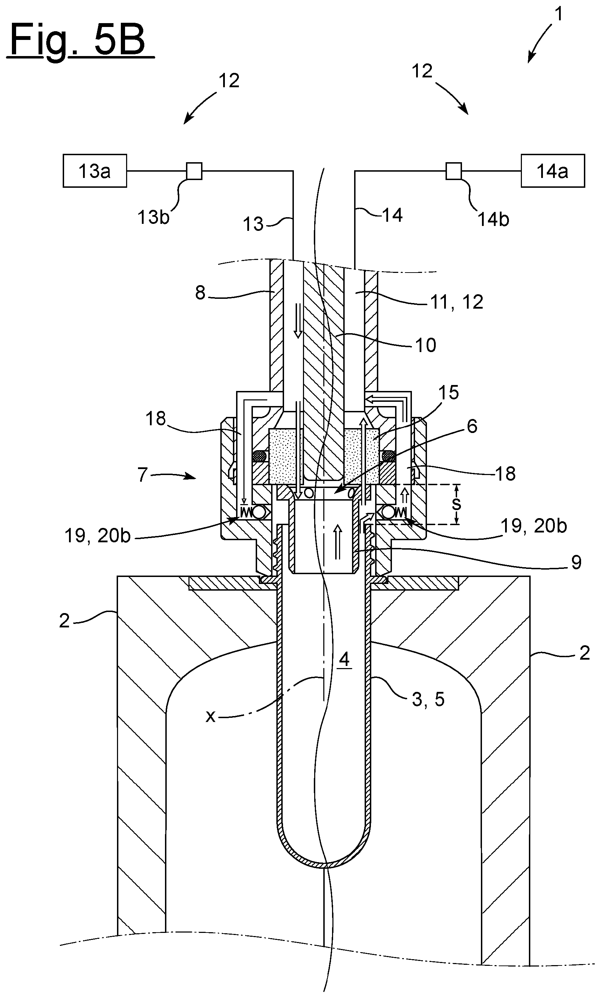

Die entgegengesetzte Ausführungsform ist in der Fig. 5B dargestellt. Das dortige Rückschlagventil 20b sperrt in Einlassrichtung, sodass nur zusätzlich mit dem Filterkörper 15 gefiltertes Fluid in den Innenraum 4 eintreten kann. In der Entlastungsphase hingegen gibt das Rückschlagventil 20b den Strömungsweg frei, sodass mit einem geringeren Strömungswiderstand eine schnelle Entleerung erfolgen kann.

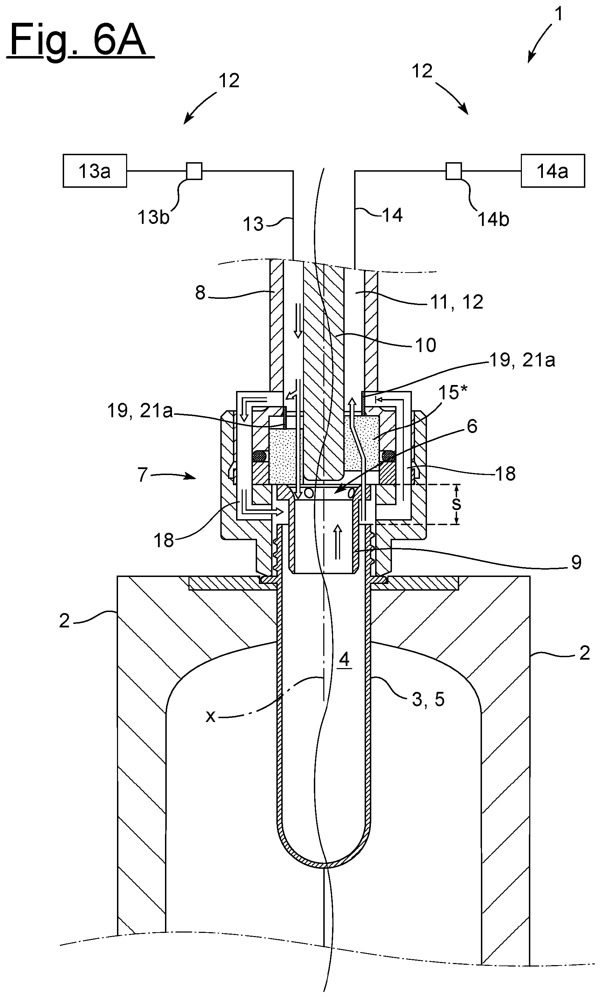

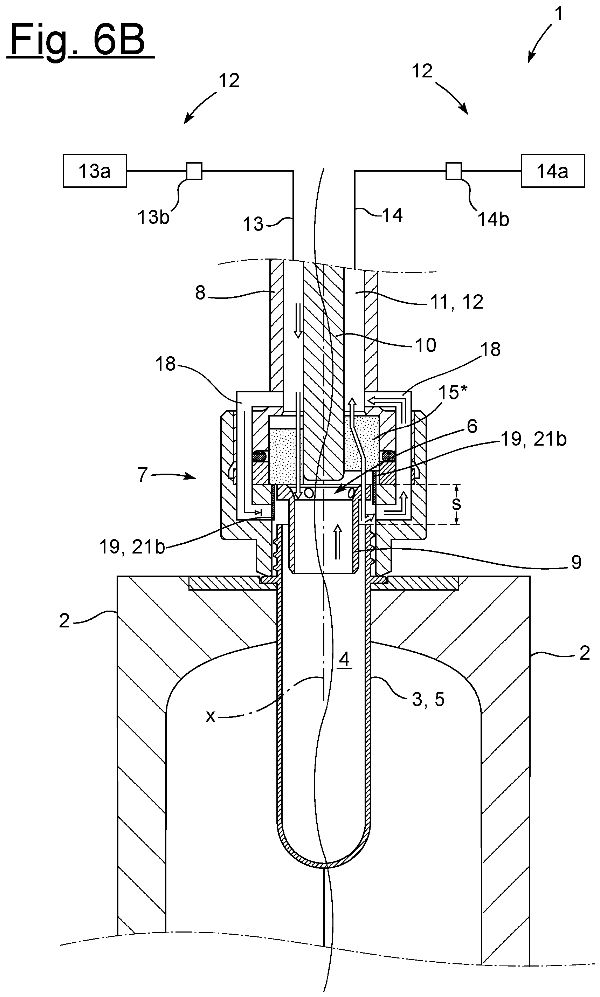

In den Figuren 6A und 6B weist die den Bypasskanal 18 steuernde Ventilanordnung 19 jeweils einen Ventilschieber 21a, 21b auf, welcher an dem einlassseitigen bzw. auslassseitigen Ende des Bypasskanals 18 angeordnet ist. Der Filterkörper 15* ist in dieser Ausführungsform entlang der Längserstreckungsachse x verschieblich an der Umformmaschine 1 gelagert. Infolge des Druckabfalls beim Ein- bzw. Ausströmen ergibt sich eine resultierende Schiebekraft längs der Längserstreckungsachse, welche zu einer Verlagerung in eine obere bzw. untere Position führt. Je nachdem, auf welcher Seite des Filterelements 15* der Ventilschieber 21a, 21b angeordnet ist, wird durch eine solche Verschiebung eine einströmseitige bzw. ausströmseitige Öffnung des Bypasskanals 18 verschlossen bzw. geöffnet. Dies ist insbesondere einer vergleichenden Betrachtung der Figuren 6A, 6B bzw. den linken und rechten Bildhälften untereinander zu entnehmen.

### Bezugszeichenliste

- 1: Umformmaschine
- 2: Außenform
- 3: Hohlkörper
- 4: Innenraum
- 5: Wandung
- 6: Mündung
- 7: Aufnahmeabschnitt
- 8: Längsrohr
- 9: Blasdüse
- 10, 10': Reckstange
- 10a': seitliche Öffnungen
- 11: erster Strömungsweg
- 12: Leitungssystem
- 13: Zuflussleitung
- 13a: Druckquelle
- 13b: erstes Ventil
- 14: Entlastungsleitung
- 14a: Drucksenke
- 14b: zweites Ventil
- 15, 15', 15", 15‴, 15′‴, 15*: Filterkörper
- 15a: unteres Ende des Filterkörpers
- 15a': hineinragender Schenkel
- 15b': zweiter Schenkel
- 15c': Durchlassöffnung
- 16, 16': innenliegender Strömungsweg
- 17: Kühlleitung
- 17a: Kühlmedienquelle
- 17b: Kühlventil
- 18: Bypasskanal
- 19: Ventilanordnung
- 20a, 20b: Rückschlagventil
- 21a, 21b: Ventilschieber
- x: Längserstreckungsachse
- s: minimaler Abstand

## Patentansprüche

1. Umformanordnung umfassend eine Umformmaschine (1) mit einer einem Anschlussbereich (7) aufweisenden Außenform (2) und zumindest einem mit dem Anschlussbereich (7) verbundenen Strömungsweg (11, 16, 16'), und umfassend einen Hohlkörper (3), welcher einen von einer Wandung (5) umschlossenen und durch eine Mündung (6) zugänglichen Innenraum (4) aufweist,
wobei der Hohlkörper (3) derart mit der Mündung (6) in dem Anschlussbereich (7) angeordnet ist, dass der Innenraum (4) in Strömungsverbindung mit dem Strömungsweg (11, 16, 16') steht, **dadurch gekennzeichnet, dass** an dem Übergang zwischen dem Strömungsweg (11, 16, 16') und dem Innenraum (4) zumindest ein Filterkörper (15, 15', 15", 15‴, 15"", 15*) angeordnet ist.

2. Umformanordnung nach dem vorangegangenen Anspruch, **dadurch gekennzeichnet, dass** der Filterkörper (15, 15', 15", 15"', 15"", 15*) einen minimalen Abstand (s) von weniger als 5 cm, vorzugsweise weniger als 1 cm, besonders bevorzugt 0 mm zu dem Innenraum aufweist.

3. Umformanordnung nach dem vorangegangenen Anspruch, **dadurch gekennzeichnet, dass** sich der Filterkörper (15, 15', 15", 15‴, 15"", 15*) in den Innenraum (4) hinein erstreckt.

4. Umformanordnung nach einem der vorangegangenen Ansprüche, **dadurch gekennzeichnet, dass** der Filterkörper (15, 15', 15", 15‴, 15"", 15*) dazu eingerichtet ist, Feststoffe mit einer Partikelgröße von zumindest 1 mm, vorzugsweise von zumindest 500 µm, besonders bevorzugt zumindest 5 µm zurückzuhalten.

5. Umformanordnung nach einem der vorangegangenen Ansprüche, **gekennzeichnet durch** einen ersten an den Innenraum angrenzenden Strömungsweg (11) und einen zweiten an den Innenraum angrenzenden Strömungsweg (16, 16') und **dadurch, dass** an dem Übergang von dem ersten Strömungsweg (11) zu dem Innenraum (4) ein erster Filterkörper (15‴) angeordnet ist und an dem Übergang von dem zweiten Strömungsweg (16') zu dem Innenraum (4) ein zweiter Filterkörper (15′‴) angeordnet ist.

6. Umformanordnung nach einem der vorangegangenen Ansprüche, **dadurch gekennzeichnet, dass** die Umformmaschine (1) einen DifferenzdruckSensor aufweist, welcher beidseits des Filterkörpers angeschlossen ist.

7. Umformanordnung nach einem der vorangegangenen Ansprüche, **dadurch gekennzeichnet, dass** in dem Anschlussbereich (7) eine Blasdüse (9) ausgebildet ist, welche sich in den Innenraum (4) hinein erstreckt und dass der Filterkörper (15, 15', 15"') zumindest teilweise innerhalb der Blasdüse (9) angeordnet ist.

8. Umformanordnung nach einem der vorangegangenen Ansprüche, **dadurch gekennzeichnet, dass** die Umformmaschine (1) eine linear verschiebliche Reckstange (10, 10') aufweist, welche eingerichtet ist mit einer Innenseite der Wandung (5) in Kontakt gebracht zu werden.

9. Umformanordnung nach dem vorangegangenen Anspruch, **dadurch gekennzeichnet, dass** der Filterkörper (15) in einem um die Reckstange ausgebildeten Ringspalt angeordnet ist.

10. Umformanordnung nach einem der vorangegangenen Ansprüche 8 oder 9, **dadurch gekennzeichnet, dass** die Reckstange (10') hohl mit einem an der Innenseite verlaufenden und an den Innenraum angeschlossenen innenliegenden Strömungsweg (16, 16') ausgebildet ist.

11. Umformanordnung nach dem vorangegangenen Anspruch, **dadurch gekennzeichnet, dass** zumindest ein Filterkörper (15", 15"') an dem Übergang zwischen dem innenliegenden Strömungsweg (16, 16') und dem Innenraum (4) angeordnet ist.

12. Umfanganordnung nach einem der vorangegangenen Ansprüche, **dadurch gekennzeichnet, dass** der Strömungsweg (11) über einen Bypasskanal (18) unter Umgehung des Filterkörpers (15, 15', 15", 15"', 15′‴, 15*) an den Innenraum (4) angeschlossen ist, welcher insbesondere durch zumindest eine Ventilanordnung (19) steuerbar ist.

13. Umfanganordnung nach dem vorangegangenen Anspruch, **dadurch gekennzeichnet, dass** die Ventilanordnung (19) ein Rückschlagventil (20a, 20b) umfasst.

14. Umformunganordnung nach einem der beiden vorangegangenen Ansprüche, **dadurch gekennzeichnet, dass** die Ventilanordnung (19) zumindest einen Ventilschieber (21a; 21a) umfasst.

15. Verfahren zum Umformen eines einen von einer Wandung (5) umschlossenen und durch eine Mündung (6) zugänglichen Innenraum (4) aufweisenden Hohlkörpers (3), wobei der Hohlkörper (3) in eine einen Anschlussbereich (7) aufweisende Hohlform (2) eingebracht wird, wonach dem Innenraum (4) über ein an den Anschlussbereich (7) angeschlossenen Strömungsweg (11, 16, 16') ein Fluid zugeführt und/oder aus dem Innenraum (4) abgelassen wird, **dadurch gekennzeichnet, dass** an dem Übergang zwischen dem Strömungsweg (11, 16, 16') und dem Innenraum (4) zumindest ein Filterkörper (15, 15', 15", 15"', 15"", 15*) angeordnet ist und dass das Fluid beim Zuführen und/oder Ablassen durch den Filterkörper (15, 15', 15", 15‴, 15′‴) hindurchgeleitet wird.
